# EUROPEAN PATENT APPLICATION

(11) **EP 3 766 626 A1**
(43) Date of publication of application: **20.01.2021**
(21) Application number: 20020260.4
(22) Date of filing: 04.06.2020
(51) Int. Cl.: B23K 26/0622, B23K 26/06, B23K 26/082, B23K 26/38, B23K 26/402, B23K 26/08, B23K 103/00

(54) **METHOD OF CUTTING PIECES OUT OF A POLYPROPYLENE FILM AND A DEVICE FOR IMPLEMENTING THIS METHOD**

(30) Priority: 18.07.2019 PL 43065319
(71) Applicant: MATSIM sp.z o.o., 75-667 Koszalin (PL)
(72) Inventor: KUKIELKA, Leon, 75-364 Koszalin (PL); KASPRZAK, Piotr, 75-336 Koszalin (PL); LADA, Dariusz, 75-430 Koszalin (PL); GRYGLICKI, Rafal, 75-667 Koszalin (PL)
(74) Representative: Orlinska, Dorota Irena

(57) **Abstract**

The object of the invention is a method of making pieces from a polypropylene film of a thickness of 20 µm to 100 µm, which includes delivering of the film over an operating table, attaching the film to the table, cutting out a piece of a set shape by means of a laser cutting head, drying the optical system of the cutting head, winding the openwork onto a take-up drum and optionally transferring the piece into the mould of an injection-moulding machine, characterised in that pieces (142) are cut out in the cold ablation process with an ultraviolet laser with a UV wavelength of 355 nm, pulse energy of 5 to 13 µJ, laser power of 5 W, frequency of 20 to 150 kHz, pulse duration of 15 to 35 ns and a spot size of 5 to 50 µm, and cutting is performed at a variable scanning speed of 50 to 1500 mm/s. The object of the invention is also a device for implementing the method.

## Description

The object of the invention is a method of cutting pieces out of a polypropylene film and a device for implementing this method. The improved method and device are used for automatic, fast and precise cutting of pieces out of polypropylene films, so-called in-mould labelling (IML) pieces, cut out in a continuous production cycle of the plastic product, immediately before the latter is put into the injection mould. Cutting is carried out by means of an ultraviolet (UV) laser beam, using the phenomenon of cold ablation and thus ensuring high performance and quality, and low production costs, as well as the possibility of cutting out a piece of any specific shapes, in dimensions ranging from a few millimetres to over 1000×1000 mm, and of adapting the properties of each piece to each individual product depending on its intended use. The method and device can be used in piece production, as well as small-lot, big-lot and mass production.

Currently, the most common method of cutting pieces out of a polypropylene films is cutting by means of a movable metal stamp or by means of a set of knives fixed above a stationary die, between which the film is fed and stepwise translated, wherein the die comprises one or more openings of a shape corresponding to the pieces cut out and to the outline of the punching unit. This method of cutting pieces out of a film is also called die-cutting, and machines for punching pieces are called die-cutting machines.

From the specification of Polish patent PL225519B1 a method of cutting pieces is known, in particular cutting out of layered materials in the form of a web being unrolled, stepwise translated between a set of cutting means the shape of which corresponds to the pieces cut out and driven motor and/or actuator means, wherein the movement of the motor of the web means is synchronized with the movement of the cutting means which strikes the web, and after cutting out, the pieces fall automatically and form a stack.

From the specification of Polish patent PL128119B1, a punching die for cutting pieces out of a film is known. The punching die consists of a guide plate supported on the die body, in which two stationary sliders are fixed which guide the punches and which are terminated with catches, and comprise cutting edges, and are moved by actuators, wherein the die body is permanently connected to the base of the punching die, in which there is a container into which cut-out pieces fall.

From the specification of Polish patent PL225519B1, a method and device are known for punching pieces from a roll being unrolled, comprising cutting knives and/or punches, between which and the die cooperating with them a film, especially a layered one, is translated stepwise, comprising a feeding unit, a cutting unit and a die unit, made of metal and driven by a motor and/or an actuator.

Among the devices for die-cutting there are drum plotters (also called roller plotters) and table plotters (also called flat plotters). Both types of plotters are used in many industries. The head of the cutting device is equipped with a blade which, controlled by a computer, operates precisely and with an appropriately programmed force.

From the website http://www.graphteccorp.com/, a roller cutting plotter of FC8600 series and flat plotters of FC2250 and FC4550 series, offered by leading Japanese company Graphtec, are known.

On the other hand, from the website http://meccanicamaggiore.pl/comet-200-kompaktowa-maszyna-do-wycinania-etykiet, Comet200 and Comet250 machines by the Comet manufacturer are known, which constitute one die-cutting station with a system of rotary magnetic cylinders and replaceable punching dies. Thanks to the innovative solution, it is possible to achieve the effect of cutting pieces out of a film 200 mm or 250 mm wide at a speed of up to 100 m/min.

In turn, from the website secabo.pl/ploter-tnacy/ploter-secabo-lc30/, the Secabo LC30 cutting plotter offered by LOGOS TRADE LTD, for cutting pieces out of a roll in the automated production of pieces in medium and small series is known. The maximum cutting width is 305 mm and the maximum cutting speed is 960 mm/s.

Recently, an increased use of laser processing in various industries, also for cutting films and marking products, has been observed. The high energy density of the concentrated laser is mainly used. As a result, in the cutting zone, charring, melting and gasification of the film take place. Laser cutting gradually replaces mechanical die-cutting of pieces.

US patent specification US20170087665 discloses a method of cutting out with a CO₂ laser, separating and transferring cut-out pieces from the roll to the stacking conveyor belt. The device on which the indicated process takes place is described as suitable for cutting pieces out of a flexible material of a single-layer structure.

A device known from the Chinese patent CN105665942 is configured based on a CO₂ laser, where the laser wavelength is 1064 nm. The device is used to cut various thin films, and then, after wrapping e.g. a boxboard, to weld the same film so that a permanent connection takes place. All cutting and welding operations are performed using the same beam source, and the change of parameters needed to perform several different operations is performed, among others, by changing the optical systems.

Another specification of the Chinese patent CN102615421 discloses a method and device for creating patterns by means of a laser beam in a very thin film applied onto a multilayer substrate, wherein the substrate comprises also a second film layer under a first film layer. The thickness of the first film layer is 15-25 nm, and the thickness of the second film layer in the multilayer substrate is 50-60 nm. The said two layers differ in composition and properties, namely the first layer contains compounds selected from the group consisting of indium tin oxide, tin dioxide, zinc oxide and aluminium zinc oxide and is transparent and conductive, and the second layer is an insulation layer and contains compounds from the group consisting of silicon dioxide, aluminium oxide and silicon nitride. The laser beam has a wavelength of 150 nm to 1100 nm, preferably 180 to 360 nm, pulse energy of 3 - 30 µJ, frequency of 50-60 kHz and scanning speed of 800-1200 mm/s, and spot size of 20 - 60 µm. During laser processing, the changes occur in the first film layer, and the resulting impurities are removed from the second film layer.

The next Chinese specification of the invention CN103128450 discloses a device for ultraviolet laser treatment which also comprises a galvanometric system, a focusing lens, a beam splitter on the optical path between the ultraviolet laser and the galvanometer, and a coaxial vision system on the upper side of the beam splitter. The ultraviolet laser beam emitted by the ultraviolet laser falls vertically on the beam splitter, is sent through the beam splitter and then completely reflected by the galvanometric system, after which it passes through the focusing lens which concentrates the ultraviolet laser beam on the workpiece.

From the next specification of the Chinese utility model CN203124969, a laser micro-machining device based on adaptive optics is known, which mainly consists of a frame, a beam splitter, four mirrors, a Z axis motor, a Z axis platform, a two-dimensional scanning galvanometer, a scanning lens, a horizontal support, a Y axis motor, a Y axis platform, a first objective, a second objective, a wave sensor and a computer. The device can dynamically adjust the state of the optical path for laser processing using adaptive optics technology and can effectively change the focal length and move the focus position using the movable optical path of the laser processing device.

US patent specification US20130258034 discloses a method of cutting out personalised IML pieces primarily used for marking details. The process of making pieces involves printing the film with heat-resistant paints, then cutting out the pieces with a CO₂ laser and inserting it into the injection mould socket by means of a manipulator. The specification indicates models and types of components, such as a printer for thermal pieces, a complete device for CO₂ laser cutting. The main assumption of the idea is the ability to give individual features to each resulting detail.

Japanese Patent JP2011230338 discloses a method and a device for cutting pieces out of a film unwound from a reel with a laser beam. The laser beam is directed onto the film surface along the outer shape in order to melt and cut the film material. Then, the cut-out pieces are wound onto a take-up reel, after which the pieces are attached by vacuum to the external surface of a special drum and further fed into the injection mould.

Most of the die-cutting devices known from patent specifications are made of metal elements and units, and the processes of cutting pieces out are always carried out by means of a punching die or cutting knives. Such cutting forces the film to contact metal elements, which causes additional electrostatic charges to be transferred to pieces, by means of which, when inserting the pieces into the mould, they electrostatically adhere to the electrified walls and are distributed unevenly, which causes folding and refraction of the pieces, leading to significant production losses. In addition, mechanical die-cutting devices are expensive, operate quite slowly and their settings should be changed at each subsequent operation. The die-cutting method can be used for pieces of small size, up to about 350 mm and in series production. However, it is not suitable for cutting pieces of a size greater than 1,000 mm, as well as for small-lot and piece production.

The said disadvantages of die-cutting are not exhibited by laser technology which is used in digital printing. Thanks to it, it is possible to punch pieces immediately after printing, in one pass, thereby obtaining a scroll ready for shipment. Modern methods of cutting pieces use CO₂ laser cutting. However, when cutting film with a thickness of 20 µm to 100 µm, also 50 µm to 80 µm, adverse physical phenomena of a photothermal nature occur, i.e. there is a sharp increase in temperature and there are surface defects such as burrs, corrugations of edges, burns and delamination of layered films. Better results are obtained when cutting with ultraviolet laser. However, the ultraviolet laser cutting method is mainly used in medicine and in product marking industry. The specificity of the UV laser consists in the use of the phenomenon of cold ablation. In the processed material, the so-called heat-affected zone is created, where the process of ablation, i.e. evaporation of material, takes place, in which the material passes from the solid state to the gaseous state bypassing the liquid state. The heat-affected zone, with the use of UV lasers, is much smaller compared to lasers with a larger wavelength. A much shorter wavelength of UV lasers, compared to e.g. CO₂ lasers operating in the infrared, allows for precise focusing and thus very high machining accuracy. Despite the multitude of UV laser devices on the market, there is not still any UV laser configured to cut a polypropylene film of a thickness of 20 to 100 µm, preferably 50 to 80 µm, intended for applications in the production of individualised IML pieces, which eliminates the disadvantages of existing methods and provides cutting of IML-type pieces of large dimensions, larger than 1000x1000 mm.

The purpose of the invention is to develop and design a method of punching IML pieces which eliminates the disadvantages of existing methods, in terms of formation of deficiencies when cutting, and the harmful effect of electrostatic charges, as well as minimizes the heat-affected zone occurring during CO₂ laser cutting, and at the same time enables the adjustment of scanning speed in the range not lower than 50 to 1500 mm per second.

The purpose of the invention is also to develop and design a device suitable for punching pieces with a stroke length above 1000 mm, from a web of a width above 1000 mm, which is characterized by high functionality and reliability of operation, and ensures quick insertion of pieces into the injection mould during the packaging production process. Adjusting the parameters of the UV laser will ensure high and repeatable quality of pieces, on the outline of which there are not any defects in the form of: carbon deposits, burns, delamination or colour changes (discolouration). Thus, the disadvantages of CO₂ laser cutting will be eliminated.

The object of the invention is a method of making pieces from a polypropylene film of a thickness of 20 µm to 100 µm, which includes delivering of the film over an operating table, attaching the film to the table, cutting out a piece of a set shape by means of a laser cutting head, drying the optical system of the cutting head, winding the openwork onto a take-up drum and optionally transferring the piece into the mould of an injection-moulding machine, characterized in that pieces (142) are cut out in the cold ablation process with an ultraviolet laser with a UV wavelength of 355 nm, pulse energy of 5 to 13 µJ, laser power of 5 W, frequency of 20 to 150 kHz, pulse duration of 15 to 35 ns and a spot size of 5 to 50 µm, and cutting is performed at a variable scanning speed of 50 to 1500 mm/s.

Preferably, when cutting the pieces out, the variable, instantaneous frequency F of the laser beam falling within the range of 20 to 150 kHz is set so that for a given thickness of the cut film and the resulting velocity V of the cutting head movement, the frequency F of the ultraviolet laser beam which induces the cutting by way of cold ablation is determined.

Preferably, when cutting the pieces out, the laser spot is guided on the outer contour of the piece, at a speed above 1.5 m/s and an acceleration above 10 m/s².

Preferably, the method includes the following operational steps in which:
a) the polypropylene film of a defined thickness is unwound from a roll in a cyclically intermittent motion, by automated means, to a required length and is fed over an upper flat surface of a perforated table,
b) the polypropylene film of a defined thickness is fixed to the upper flat surface of the perforated table,
c) a piece of a set shape is cut out by a cutting unit comprising a cutting head,
d) the optical system of the cutting head is dried,
e) the ready piece is lifted by means of a manipulator unit and is fed to a robot which moves and positions the ready piece in the mould of an injection-moulding machine,
f) the openwork is wound onto a take-up roll in a cyclically intermittent motion by automated winding means,
g) one returns to step "a" in order to cut out another piece, identical to or different from the previous one.

The object of the invention is also a device for cutting pieces out of a polypropylene film, comprising an ultraviolet laser cutting unit provided with an ultraviolet laser source and a cutting head, a flat plotter unit, a polypropylene film feeding unit, a flat table unit with a film attaching system, a system for drying the cutting head optical system, a manipulator unit, a control panel, a control program (130), characterised in that the ultraviolet laser has a UV wavelength of 355 nm, pulse energy of 5 to 13 µJ, laser power of 5 W, frequency of 20 to 150 kHz, pulse duration of 15 to 35 ns and a spot size of 5 to 50 µm, and cutting is performed at a variable scanning speed of 50 to 1500 mm/s.

Preferably, the device comprises a stationary ultraviolet laser source, cooled with a refrigerant, arranged along a right longitudinal member, in front of a plotter, outside the range of movement of the cutting head, emitting a concentric laser beam with a wavelength of 355 nm, and a laser beam refraction system comprising a stationary expander, attached to the right longitudinal member and three mirrors: first, second and third, completely reflecting the laser beam and refracting it at an angle of 90° and the cutting head which focuses the laser beam on the film surface, wherein the mirror and the cutting head are attached to a movable holder, while the first and second mirrors are attached to a movable crossbar.

Preferably, the flat plotter has two longitudinal members, right and left one, wherein upper and lower guides and a straight edge are attached to each longitudinal member, and upper and lower guides of a movable holder are attached to the movable crossbar which moves along the guides, and at each end of the crossbar, there is a linear motor and a contactless linear encoder with a resolution below a micrometre for driving along the X axis, wherein both linear motors are synchronised with each other, and on one side of the movable holder, the cutting head and the third mirror are attached, and on the other side thereof, a linear motor and a contactless linear encoder with a resolution below a micrometer for driving along the Y axis are attached, moreover, all the linear motors are synchronised with each other.

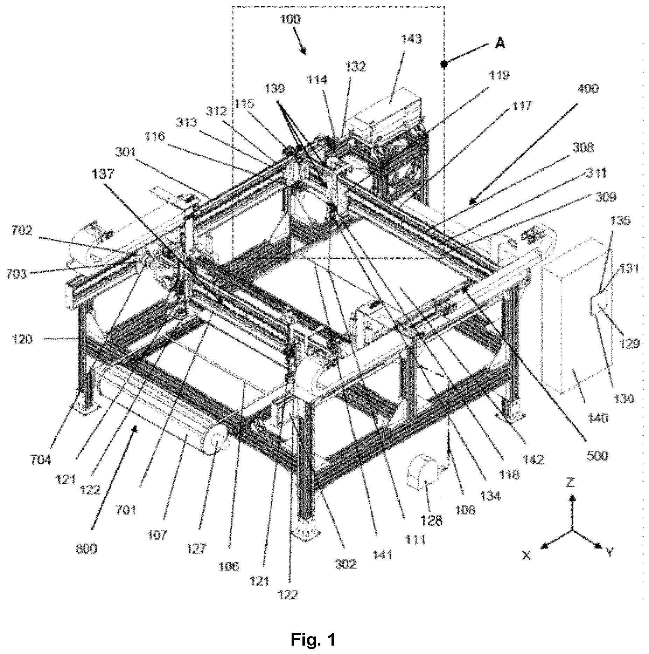

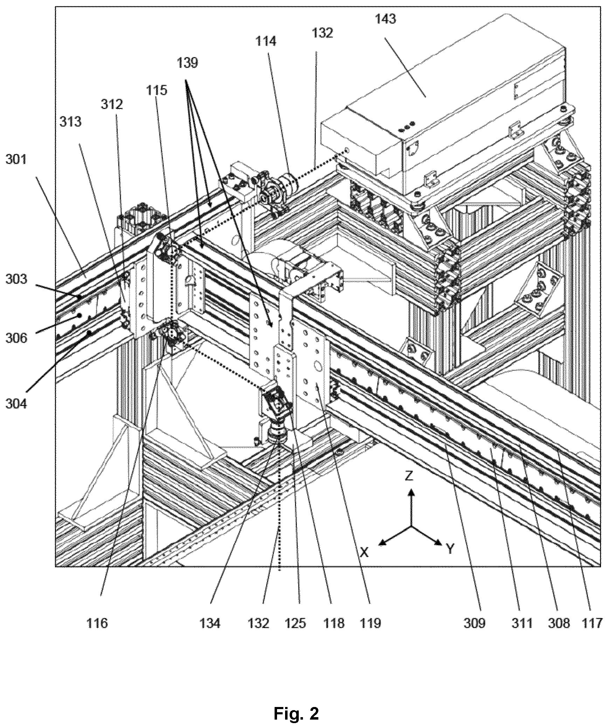

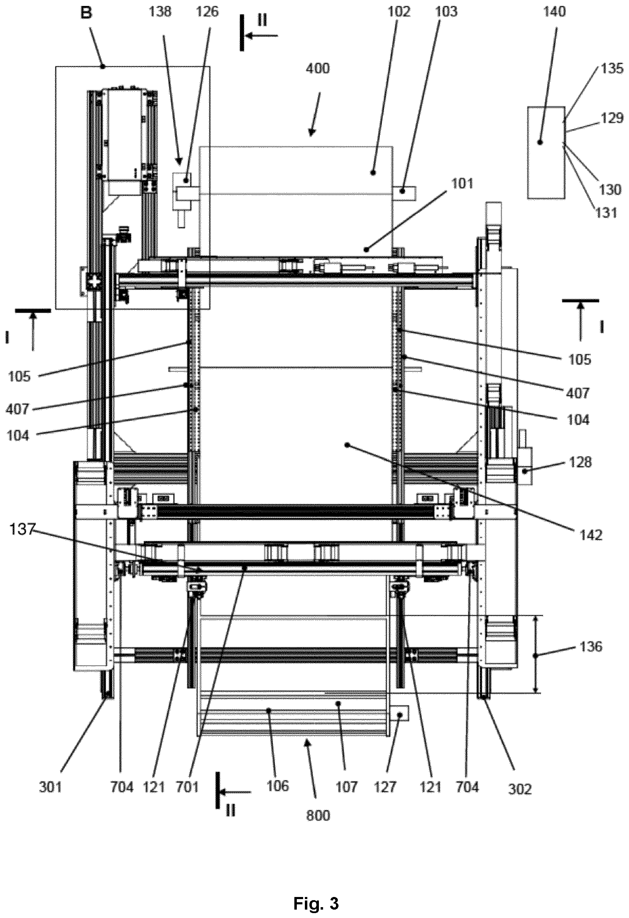

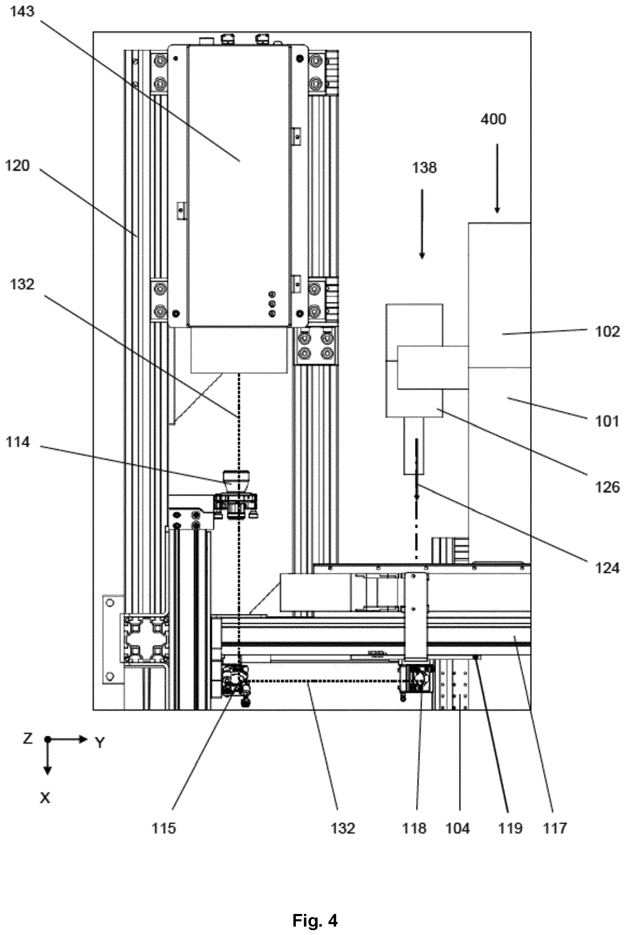

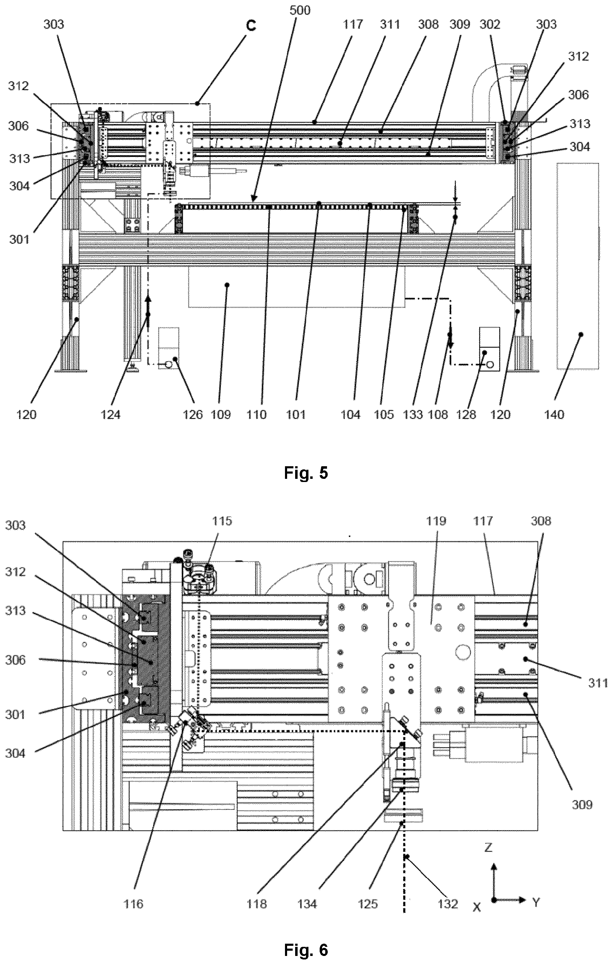

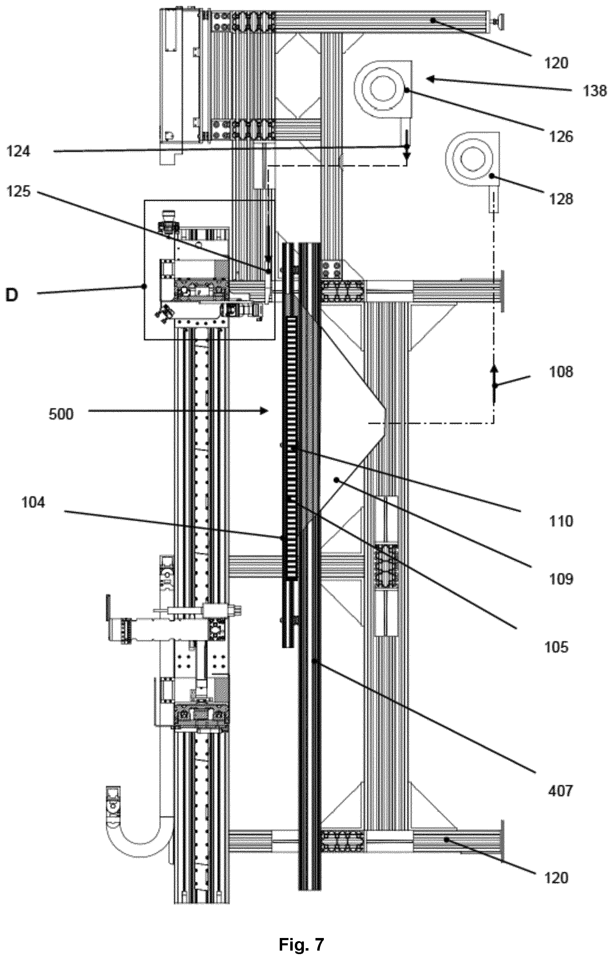

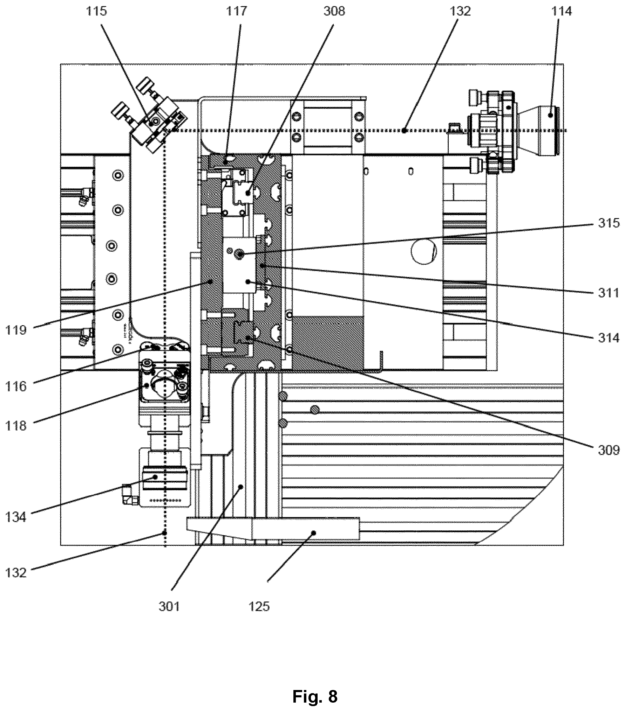

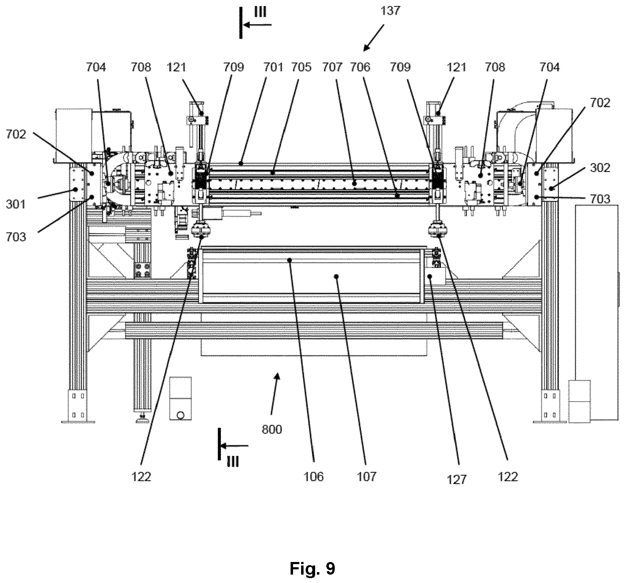

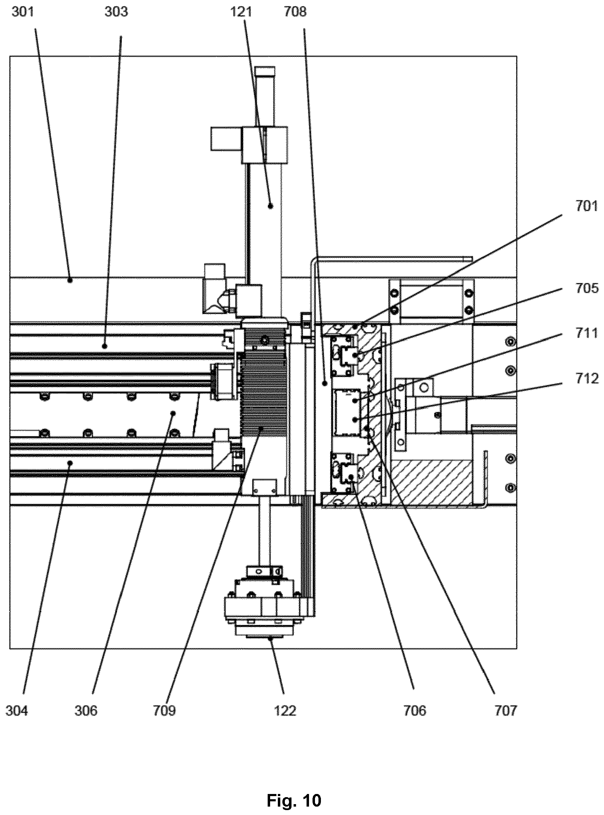

The object of the invention is shown in an embodiment in the drawing, in which: Fig. 1 is an isometric view of a device for punching pieces in an embodiment of the invention; Fig. 2 is an enlargement of detail A of the punching cutting unit of Fig. 1; Fig. 3 is a top view of the device for punching pieces in the embodiment of the invention; Fig. 4 is an enlargement of detail B of the punching means of Fig. 3; Fig. 5 is a cross-section along line I-I of the device for punching pieces of Fig. 3; Fig. 6 is an enlargement of detail C of the punching means of Fig. 5; Fig. 7 is a cross-section along line II-II of the device for punching pieces of Fig. 3; Fig. 8 is an enlargement of detail D of the plotter drive along the X axis of Fig. 7; Fig. 9 is a frontal view of the device for punching pieces in the embodiment of the invention; Fig. 10 is a cross-section along line III-III of the device for punching pieces of Fig. 9.

In the course of developing the invention, tests were carried out for cutting pieces out of multilayer polypropylene film placed on a flat glass table, wherein this film has a thickness of 20 µm to 100 µm, preferably 50 µm to 80 µm. The ultraviolet laser beam was chosen so that it had a wavelength of 355 nm, pulse energy of 5 to 15 J, laser power of 5 W, frequency of 20-150 kHz, scanning speed of 800-1500 mm/s and a spot size below 20 µm.

After many experiments, it is known that for a given film thickness and a required cutting quality, the frequency of the laser beam depends on the scanning speed. It was found that when cutting pieces out, especially those of complex shapes and various sizes, the scanning speed is also variable and varies in the range of 50-1500 mm/s, i.e. it can be higher when cutting in a straight line and is lowered for complex cutting lines or for sharp returns/turns of external contour of the piece. Therefore, it is necessary for the scanning speed to be controlled in real time with the laser beam frequency. These parameters must be correlated with each other, and the functional relationship must be identified for the needs of cutting control. In this manner, it was possible to develop a process of punching high-quality pieces, wherein the width of the degraded zone is minimal and does not exceed 0.15 mm, and when cutting in the film material, the effect of cold ablation with a minimum heat-affected zone is created, while ensuring high performance of cutting speed. For each film thickness of 20, 50, 60, 70, 80 and 100 µm, a correlation function was developed between the scanning speed and the pulse frequency of the laser beam. For example, for a polypropylene film thickness of 50 µm, with a scanning speed of 100-1500 mm/s and a laser frequency of 110-113 Hz, the correlation function is: frequency = - 0.0018 × speed + 113.35 Hz, with a correlation coefficient R = 0, 9915; whereas for a film thickness of 80 µm, with a scanning speed of 200-1500 mm/s and a laser frequency of 83-84 Hz, the correlation function is: frequency = - 0.001 × speed + 83.284 Hz, with a correlation coefficient R = 0.9827.

In conclusion, the present invention relates to an improved method and device for cutting IML pieces out of a polypropylene film, especially a multilayer film, with dimensions over 1000x1000 mm, using an ultraviolet laser beam with such parameters that the phenomenon of cold ablation and high quality of cut-out piece are ensured, while maintaining at the same time high performance of the scanning speed. The cycle is repeated with a frequency of 1,000 to 100,000 cutting passes per hour.

The device for automatic cutting labels out of a polypropylene film in IML technology by means of a UV laser beam comprises known systems: a cutting unit, a flat plotter unit, a polypropylene film feeding unit, a flat table unit with a film attaching system, a system for drying the cutting head optical system, a manipulator unit, an openwork winding unit, a touch control panel with a computer and a specialised software.

The improved method of the invention, as shown e.g. in Fig. 1, includes the following operational steps:
a. Unwinding a polypropylene film 101 of a suitable thickness 133 from a feeding drum 102 in a cyclically intermittent motion, by means of a known automated unwinding means 103, to a required length 136 in the cycle and feeding it over an upper flat surface 104 of a perforated table 105.
b. Attaching the polypropylene film 101 of a suitable thickness 133 to the upper flat surface 104 of the perforated table 105.
c. Cutting out a piece 142 having a required outer contour 141 by means of a cutting unit 100.
d. Drying the optical system of a cutting head 134.
e. Optionally, lifting the ready piece 142 by means of a manipulator unit 137 which passes it to a robot, not shown in the drawing, and the robot positions the ready piece 142 in the mould of an injection-moulding machine, not shown in the drawing.
f. Winding the openwork 106 onto a take-up roll 107 in a cyclically intermittent motion.
g. Returning to step "a" in order to cut out a new piece, identical to or different from the previous one.

According to the invention, in step "b", the attachment of the propylene film 101 to the perforated table 105 takes place by creating a vacuum 108 in a chamber 109 which is connected to the upper flat surface 104 of the perforated table 105 by means of through holes 110.

The cutting unit 100, shown in Fig. 1, for cutting pieces 142 out in step "c", is placed in front of the manipulator unit 137, and the cutting process is carried out by means of an ultraviolet laser beam 132 having the following parameters: UV wavelength of 355 nm, pulse energy of 5 to 13 µJ, laser power of 5 W, frequency of 20-150 kHz, pulse duration of 15-35 ns.

The laser beam is focused on the film surface in the form of a spot 111, with a diameter smaller than 20 µm, by means of the cutting head 134 which is coupled with a flat plotter 139. Movement of the cutting head 134 in the XY plane, according to the outer contour 141 of the piece 142, is forced by known means of linear drive of the flat plotter 139 along the X axis and the Y axis so that they provide a required translation in the direction of the X axis in the range of DX=0÷1100 mm and in the direction of the Y axis in the range of DY=0÷M500 mm and a required scanning speed of 50÷1500 mm/s and a scanning acceleration above 10 m/s².

When cutting the piece 142 out, the instantaneous frequency of the laser beam 132 is determined by means of a control program 130 installed on a computer 135 located in a control cabinet 140 so that for a given thickness 133 of the cut film 101 and for the resultant scanning speed V of the cutting head 134, the optimal frequency F of the laser beam 132 is determined, thereby ensuring the occurrence, when cutting the piece 142 out, of the phenomenon of cold ablation, while maintaining at the same time the high scanning speed V. The path of movement of the cutting head 134 (identical to the outer contour 141 of the piece 142) depends on its translation along the mutually perpendicular X and Y axes which are synchronized, according to the coordinate values specified by the control program 130 and to the set scanning speed V, and to the set acceleration. An economically justified, accurate cut-out of the piece 142 having the required shape, i.e. the outer contour 141, is obtained.

The computer 135 with a touch control panel 129 allows the operator to enter individual data on the cut-out piece 142 and to visualise the course of the required parameters at any moment during or after operation of the device.

The ultraviolet laser beam 132 with a wavelength of 355 nanometers and with a variable frequency F dependent on the scanning speed V is emitted horizontally along the X axis from a coaxial ultraviolet laser source 143, wherein the source 143 is cooled by means of a refrigerant fed from a cooler, and the beam 132 passes farther through a stationary expander 114 and falls onto a first mirror 115 which completely reflects it, after which the reflected beam 132 is further transmitted in the direction of the Z axis to a second mirror 116, where it undergoes another complete reflection and changes its direction to horizontal along the Y axis and is sent to a third mirror 118, where it undergoes another complete reflection and changes its direction to vertical Z, and finally the laser beam 132 after passing through the cutting head 134 is focused, thereby forming a spot 111, on the cut propylene film 101. The energy of the focused UV laser beam induces the photochemical phenomenon of cold ablation in the film cutting zone 101, thanks to which processes of breaking polymer chemical bonds of the film macromolecules and the transition of the material from the solid to the gas phase occur. The stationary expander 114 is attached to a right longitudinal member 301 of a frame 120, whereas the mirrors, the first one 115 and the second one 116, are attached to a crossbar 117 and move with it in the direction of the X axis. In turn, the third mirror 118 and the cutting head 134 are attached to a movable holder 119, and the latter is connected to the crossbar 117. The third mirror 118 and the cutting head 134 move together with the movable holder 119 in the direction of the Y axis.

Drying of the optical system of the cutting head 134 in step "d" preferably takes place by means of a stream of dry air 124 fed to a nozzle 125 from a first compressor 126.

The method of the invention includes an optional step of transferring cut-out pieces to the mould of an injection-moulding machine, i.e. the process may also include transferring pieces to the mould or may not include this transferring, or the transferring to the injection-moulding machine may take place in a separate production line, preceded by transport of cut-out pieces, etc.

According to the invention, the manipulator unit 137 transferring the piece 142 in step "e" is located behind the plotter 139 on the same frame 120 and, for example, serves to rotate a crossbar 701 in the Y axis by the angle DK=-20°+60° with the possibility of translation relative to the X axis in the range above DX=0÷750 mm, and each of arms 121 provides an additional linear translation along the Y axis in the range DX=0÷M000 mm and along the vertical Z axis in the range DZ=0÷120 mm, wherein the lifting of the ready piece 142 takes place by means of suction cups 122 which are under vacuum. In turn, the said robot, not shown in the drawing, transferring and positioning the piece 142 in the target mould of the injection-moulding machine, not shown in the drawing, is for example a Cartesian or anthropomorphic robot.

Winding of the openwork 106 onto a take-up drum 107 in step "f" is carried out in a cyclically intermittent motion by means of automated winding means 127 which are usually synchronised with automated means 103 for unwinding the film 101 from the feeding drum 102.

A device for automatically cutting labels out of a polypropylene film by means of a UV laser beam, shown in Fig. 1, Fig. 2, Fig. 3, in an exemplary embodiment, comprises: an ultraviolet laser cutting unit 100, a flat plotter unit 139, a polypropylene film feeding unit 400, a flat table unit with a film attaching system 500, a drying unit 138, a manipulator unit 137, an openwork winding unit 800, a touch control panel 129 with a computer 135, a control program 130 and a specialised software 131.

The ultraviolet laser cutting unit 100, shown in Fig. 1, Fig. 2 and Fig. 4 comprises a stationary, cooled source 143 of ultraviolet laser beam 132, attached to a right longitudinal member 301 of a frame 120 and located along the right longitudinal member 301, in front of a crossbar 117, beyond the movement range of a cutting head 134 emitting the concentric laser beam 132, a laser beam refraction system 132 comprising an expander 114, attached to the crossbar 117, and three mirrors: first 115, second 116 and third 118, completely reflecting the laser beam and refracting it at the angle of 90 degrees and the cutting head 134 focusing the laser beam in the form of a spot 111 on the surface of the film 101, wherein the cutting head 134 is attached to a movable holder 119, whereas the first mirror 115 and the second mirror 116 are attached to the movable crossbar 117, and the third mirror 118 is attached to the movable holder 119 above the cutting head 134.

The flat plotter 139, shown in Fig. 1, Fig. 2 and Fig. 3, comprises two longitudinal members, right one 301 and left one 302, attached to a frame 120, wherein an upper guide 303 and a lower guide 304, and a straight edge 306 are attached to each longitudinal member. An upper guide 308 and a lower guide 309, and a straight edge 311 of the movable holder 119, shown in Fig 2, 5 and 6, are attached to the movable crossbar 117 which moves along the guides 303 and 304, and at each end of the crossbar 117, there is a linear motor 312 and a contactless linear encoder 313 with a resolution below a micrometre for driving along the X axis, wherein both linear motors 312 are synchronized with each other and ensure the resultant movement speed of the cutting head 134 above 1.5 m/s with an acceleration above 10 m/s². In turn, and on one side of the movable holder 119, the cutting head 134 and the third mirror 118 are attached, and on the other side thereof, a linear motor 314 and a contactless linear encoder 315, shown in Fig. 8, for driving along the Y axis are attached.

The film feeding unit 400 comprises a feeding drum 102 driven by a cyclically intermittent motion by means of known automated unwinding means 103 to unwind the polypropylene film 101 with a thickness 133 in the range of 20 to 100 microns, preferably 50 to 80 microns, from the feeding drum 102 to a required length 136, and guides 407 which feed the polypropylene film to an upper flat surface 104 of a perforated table 105.

The flat table unit with the film attaching system 500 comprises the table 105 perforated with through holes 110 through which it is connected to a vacuum chamber 109 in which a vacuum 108 is created by means of a second air compressor 128, thereby ensuring secure attachment of the propylene film 101 of the thickness 133 to the upper flat surface 104 of the perforated table 105.

The drying unit 138 comprises a first air compressor 126, from which an air stream 124 is fed at a given overpressure to a nozzle 125 which directs it into a zone between the film surface 101 and the cutting head 134 in order to dry the head lens.

The manipulator unit 137 which is located behind the cutting unit 100 comprises a crossbar 701, and at each end of the crossbar a linear motor 702 and a contactless linear encoder 703 with a resolution below the micrometre are located, wherein both linear motors 702 are synchronised with each other, thereby allowing the manipulator to be translated along the X axis in the range of 0 ÷ 750 mm along the upper guide 303 and the lower guide 304 of the right 301 and left 302 longitudinal members. At both ends of the crossbar 701 near the right 301 and left 302 longitudinal guides, rotary motors 704 are built-in to rotate the crossbar 701 in the Y axis by an angle of -20°+60°. An upper guide 705 and a lower guide 706, and a straight edge 707, shown in Fig 9 and Fig. 10, on which two handles 708 move, are attached to the crossbar 701, to which handles, on one side, through a linear motor 709, an arm 121 is attached, and on the other side of the handle 708, a linear motor 711 and a contactless linear encoder 712 with a resolution below a micrometre are attached for driving along the Y axis in the range of 0÷1000 mm, and the linear motor 709 is used for moving the arm 121 along the vertical Z axis in the range of 0÷120 mm, wherein the ready piece 142 is lifted by means of suction cups 122 which are under vacuum and are located at the end of the arms 121. In turn, the said robot, not shown in the drawing, transferring and positioning the piece 142 in the mould of the injection-moulding machine, not shown in the drawing, is usually a Cartesian or anthropomorphic robot.

The openwork winding unit 800, shown in Fig. 1 and Fig. 3, comprises a take-up drum 107 driven in a cyclically intermittent motion by means of known automated winding means 127 to wind the openwork 106 from the polypropylene film after cutting the pieces 142 out onto the take-up drum 107, wherein the drive 127 is synchronised with the automated unwinding means 103 of the feeding drum drive 102.

The computer 135 and the touch control panel 129 allow the operator to enter individual data on the cut-out label and to visualise the course of the required parameters at any moment of time during or after operation of the device. The computer 135 comprises the specialised software 131 for data collection and the control program 130 for controlling cutting parameters during operation of the device and for: programming CNC cycles, operating the Gantry system and synchronising all the cooperating linear motors, loading cut-out profiles saved as .dxf and .dwg files and directly controlling laser settings, and supporting the graphical user interface.

## Claims

1. A method of making pieces from a polypropylene film of a thickness of 20 µm to 100 µm, including delivering of the film over an operating table, attaching the film to the table, cutting out a piece of a set shape by means of a laser cutting head, drying the optical system of the cutting head, winding the openwork onto a take-up drum and optionally transferring the piece into the mould of an injection-moulding machine, **characterized in that** pieces (142) are cut out in the cold ablation process with an ultraviolet laser with a UV wavelength of 355 nm, pulse energy of 5 to 13 µJ, laser power of 5 W, frequency of 20 to 150 kHz, pulse duration of 15 to 35 ns and a spot size of 5 to 50 µm, and cutting is performed at a variable scanning speed of 50 to 1500 mm/s.

2. The method according to claim 1, **characterized in that**, when cutting the pieces (142) out, the variable, instantaneous frequency (F) of the laser beam falling within the range of 20 to 150 kHz is set so that for a given thickness (133) of the cut film (101) and the resulting velocity (V) of the cutting head (134) movement, the frequency (F) of the ultraviolet laser beam (132) which induces the cutting by way of cold ablation is determined.

3. The method according to claim 1 or 2, **characterized in that**, when cutting the pieces (142) out, the laser spot (111) is guided on the outer contour (141) of the piece (142), at a speed above 1.5 m/s and an acceleration above 10 m/s².

4. The method according to claim 1 or 2, or 3, **characterized in that** it includes the following operational steps in which:
a) the polypropylene film (101) of a thickness (133) is unwound from a roll (102) in a cyclically intermittent motion, by automated means (103), to a required length (136) and is fed over an upper flat surface (104) of a perforated table (105),
b) the polypropylene film (101) of a thickness (133) is attached to the upper flat surface (104) of the perforated table (105),
c) a piece (142) of a set shape (141) is cut out by a cutting unit (100) comprising a cutting head (134),
d) the optical system of the cutting head (134) is dried,
e) the ready piece (142) is lifted by means of a manipulator unit (137) and is fed to a robot which moves and positions the ready piece (142) in the mould of an injection-moulding machine,
f) the openwork (106) is wound onto a take-up roll (107) in a cyclically intermittent motion by automated winding means (127),
g) one returns to step "a" in order to cut out another piece, identical to or different from the previous one.

5. A device for cutting pieces out of a polypropylene film, comprising an ultraviolet laser cutting unit (100) provided with an ultraviolet laser source (143) and a cutting head (134), a flat plotter unit (139), a polypropylene film feeding unit (400), a flat table unit with a film attaching system (500), a system (138) for drying the cutting head optical system, a manipulator unit (137), a control panel (129), a control program (130), **characterized in that** the ultraviolet laser has a UV wavelength of 355 nm, pulse energy of 5 to 13 µJ, laser power of 5 W, frequency of 20 to 150 kHz, pulse duration of 15 to 35 ns and a spot size of 5 to 50 µm, and cutting is performed at a variable scanning speed of 50 to 1500 mm/s.

6. The device according to claim 5, **characterized in that** it comprises a stationary ultraviolet laser source (143), cooled with a refrigerant, arranged along a right longitudinal member (301), in front of a plotter (139), outside the range of movement of the cutting head (134), emitting a concentric laser beam (132) with a wavelength of 355 nm, and a laser beam refraction system comprising a stationary expander (114), attached to the right longitudinal member (301) and three mirrors: first (115), second (116) and third (118), completely reflecting the laser beam and refracting it at an angle of 90° and the cutting head (134) which focuses the laser beam on the film (101) surface, wherein the mirror (118) and the cutting head (134) are attached to a movable holder (119), while the first (115) and second (116) mirrors are attached to a movable crossbar (117).

7. The device according to claim 5 or 6, or 7, **characterized in that** the flat plotter (139) comprises two longitudinal members: right one (301) and left one (302), wherein an upper guide (303) and a lower guide (304), and a straight edge (306) are attached to each longitudinal member, and an upper guide (308) and a lower guide (309) of the movable holder (119) are attached to the movable crossbar (117) which moves along the guides (303) and (304), and at each end of the crossbar (117), there is a linear motor (312) and a contactless linear encoder (313) with a resolution below a micrometre for driving along the X axis, wherein both linear motors (312) are synchronized with each other, and on one side of the movable holder (119), the cutting head (134) and the third mirror (118) are attached, and on the other side thereof, a linear motor (314) and a contactless linear encoder (315) with a resolution below a micrometer for driving along the Y axis are attached, moreover, all the linear motors are synchronized with each other.
